# EUROPEAN PATENT SPECIFICATION

(11) **EP 2 551 946 B1**
(45) Date of publication and mention of the grant of the patent: **12.08.2015**
(21) Application number: 11849071.3
(22) Date of filing: 08.12.2011
(51) Int. Cl.: H01M 8/04, F24H 1/00, H01M 8/06

(54) **POWER GENERATING SYSTEM AND METHOD OF OPERATING SAME**
STROMERZEUGUNGSSYSTEM UND BETRIEBSVERFAHREN DAFÜR
SYSTÈME DE GÉNÉRATION DE PUISSANCE, ET PROCÉDÉ DE FONCTIONNEMENT ASSOCIÉ

(30) Priority: 13.12.2010 JP 2010276954
(43) Date of publication of application: 30.01.2013
(73) Proprietor: Panasonic Corporation, Osaka 571-8501 (JP)
(72) Inventor: INOUE, Atsutaka, Osaka 540-6207 (JP); TATSUI, Hiroshi, Osaka 540-6207 (JP); MORITA, Junji, Osaka 540-6207 (JP); YASUDA, Shigeki, Osaka 540-6207 (JP); YUKIMASA, Akinori, Osaka 540-6207 (JP)
(74) Representative: Grünecker Patent- und Rechtsanwälte PartG mbB
(86) International application number: PCT/JP2011/006868
(87) International publication number: WO 2012/081206

(56) References cited:
- EP-A1- 2 637 241
- EP-A2- 1 835 240
- DE-A1- 10 000 406
- JP-A- 2002 349 844
- JP-A- 2005 063 697
- JP-A- 2006 073 446
- JP-A- 2007 095 542
- JP-A- 2008 135 267
- JP-A- 2008 159 460
- JP-A- 2008 210 631
- JP-A- 2009 021 047

## Description

### Technical Field

The present invention relates to a power generation system configured to supply heat and electricity and a method of operating the power generation system, and particularly to the method of operating the power generation system.

### Background Art

A cogeneration system supplies generated electric power to users for electric power loads and recovers and stores exhaust heat for hot water supply loads of the users, the exhaust heat being generated by the electric power generation. Known as this type of cogeneration system is a cogeneration system configured such that a fuel cell and a water heater operate by the same fuel (see PTL 1, for example). A cogeneration system disclosed in PTL 1 includes: a fuel cell; a heat exchanger configured to recover heat generated by the operation of the fuel cell; a hot water tank configured to store water having flowed through the heat exchanger to be heated; and a water heater configured to heat the water flowing out from the hot water tank up to a predetermined temperature, and is configured such that the fuel cell and the water heater operate by the same fuel.

Moreover, a fuel cell power generation apparatus provided inside a building is known, which is configured for the purpose of improving an exhaust performance of the fuel cell power generation apparatus (see PTL 2, for example). A power generation apparatus disclosed in PTL 2 is a fuel cell power generation apparatus provided and used in a building including an intake port and includes an air introducing port through which air in the building is introduced to the inside of the fuel cell power generation apparatus, an air discharging pipe through which the air in the fuel cell power generation apparatus is discharged to the outside of the building, and a ventilation unit. The ventilation unit introduces the air from the outside of the building through the intake port to the inside of the building, further introduces the air through the air introducing port to the inside of the fuel cell power generation apparatus, and discharges the air through the air discharging pipe to the outside of the building.

Further, a power generation apparatus including a duct extending in a vertical direction is known, which is configured for the purpose of improving the exhaust performance of an exhaust gas generated by a fuel cell provided inside a building (see PTL 3, for example). In a power generation apparatus disclosed in PTL 3, a duct extending inside a building in a vertical direction and having an upper end portion located outside the building is a double pipe, and a ventilating pipe and an exhaust pipe are coupled to the duct such that an exhaust gas or air flows through the inside or outside of the duct.

### Citation List

### Patent Literature

PTL 1: Japanese Laid-Open Patent Application Publication No. 2007-248009
PTL 2: Japanese Laid-Open Patent Application Publication No. 2006-73446
PTL 3: Japanese Laid-Open Patent Application Publication No. 2008-210631

DE 100 00 406 A1 relates to an air heating boiler having a main burner and a fuel cell each with a fan. The boiler further includes a temperature sensor and a control unit.

### Summary of Invention

### Technical Problem

Here, in the case of providing the cogeneration system disclosed in PTL 1 in a building, the below-described configuration may be adopted in reference to the power generation apparatus disclosed in PTL 2 or 3. To be specific, the configuration is that: a cogeneration unit and a hot water supply unit are separately provided, the cogeneration unit including a ventilation fan, a fuel cell, and a hydrogen generating unit configured to supply a fuel gas to the fuel cell, the hot water supply unit including a water heater; and an exhaust passage causing the cogeneration unit and the water heater to communicate with each other is formed.

In this configuration, for example, in a case where the water heater is activated and the ventilation fan is not activated, the exhaust gas discharged from the water heater may flow through the exhaust passage into the cogeneration unit. Then, one problem is that if the cogeneration unit is activated in a state where the exhaust gas has flowed into the cogeneration unit, the exhaust gas having a low oxygen concentration is supplied to the combustor provided in the cogeneration unit, and an ignition failure of the combustor of the fuel cell system easily occurs.

An object of the present invention is to provide a power generation system capable of suppressing the ignition failure of a combustor of a fuel cell system and having high reliability in the case of providing an exhaust passage causing the fuel cell system and a combustion device to communicate with each other as above, and a method of operating the power generation system.

### Solution to Problem

To solve the above conventional problems, a power generation system according to the present invention is defined in claim 1.

Here, the expression "when the fuel cell system is activated" denotes "when the fuel cell system starts the activation". Specifically, for example, the expression "when the fuel cell system is activated" may denote "when a signal is input to the controller such that the activation of the fuel cell system is started" or "when the controller outputs a signal to devices constituting the fuel cell system such that the activation of the fuel cell system is started". In other words, the expression "when the fuel cell system is activated" denotes a period from when the signal is input to the controller such that the activation operation of the fuel cell system is started until when the devices constituting the fuel cell system starts operating.

With this, even if the exhaust gas discharged from the combustion device flows into the case by operating the combustion device when the ventilator is in a stop state, the exhaust gas in the case can be discharged to the outside of the case by operating the ventilator when the fuel cell system is activated. Therefore, the decrease in the oxygen concentration in the case can be suppressed. On this account, the ignition failure of the combustor of the fuel cell system can be suppressed, and the reliability of the power generation system can be improved.

Further advantageous embodiments are defined in claims 2 - 7.

A method of operating the power generation system according to the present invention is a method of operating a power generation system as defined in claim 8.

With this, even if the exhaust gas discharged from the combustion device flows into the case by operating the combustion device when the ventilator is in a stop state, the exhaust gas in the case can be discharged to the outside of the case by operating the ventilator when the fuel cell system is activated. Therefore, the decrease in the oxygen concentration in the case can be suppressed. On this account, the ignition failure of the combustor of the fuel cell system can be suppressed, and the reliability of the power generation system can be improved.

### Advantageous Effects of Invention

According to the power generation system of the present invention and the method of operating the power generation system, even if the exhaust gas discharged from the combustion device flows into the case by operating the combustion device when the ventilator is in a stop state, the exhaust gas in the case can be discharged to the outside of the case by operating the ventilator when the fuel cell system is activated. Therefore, the ignition failure of the combustor of the fuel cell system can be suppressed, and the reliability of the power generation system can be improved.

### Brief Description of Drawings

[Fig. 1] Fig. 1 is a schematic diagram showing the schematic configuration of a power generation system according to Embodiment 1 of the present invention.
[Fig. 2] Fig. 2 is a flow chart schematically showing an activation operation of a fuel cell system of the power generation system according to Embodiment 1.
[Fig. 3] Fig. 3 is a schematic diagram showing an example in which a temperature detector is used as an operation detector in the power generation system shown in Fig. 1.
[Fig. 4] Fig. 4 is a schematic diagram showing an example in which a pressure detector is used as the operation detector in the power generation system shown in Fig. 1.
[Fig. 5] Fig. 5 is a schematic diagram showing an example in which a gas concentration detector is used as the operation detector in the power generation system shown in Fig. 1.
[Fig. 6] Fig. 6 is a schematic diagram showing an example in which a sound detector is used as the operation detector in the power generation system shown in Fig. 1.
[Fig. 7] Fig. 7 is a schematic diagram showing the schematic configuration of the power generation system of Modification Example of Embodiment 1.
[Fig. 8] Fig. 8 is a flow chart schematically showing the activation operation of the fuel cell system of the power generation system according to Embodiment 2.
[Fig. 9] Fig. 9 is a schematic diagram showing the schematic configuration of the power generation system according to Embodiment 3 of the present invention.

### Description of Embodiments

Hereinafter, preferred embodiments of the present invention will be explained in reference to the drawings. In the drawings, the same reference signs are used for the same or corresponding components, and a repetition of the same explanation is avoided. Moreover, in the drawings, only components necessary to explain the present invention are shown, and the other components are not shown. Further, the present invention is not limited to the following embodiments.

### Embodiment 1

A power generation system according to Embodiment 1 of the present invention includes: a fuel cell system including a fuel cell, a case, a reformer, and a combustor; a ventilator; a combustion device; a discharge passage; and a controller, and the controller causes the combustion device to operate when the ventilator is in a stop state and then causes the ventilator to operate when the fuel cell system is activated.

There, the expression "when the fuel cell system is activated" denotes "when the fuel cell system starts the activation". Specifically, for example, the expression "when the fuel cell system is activated" may denote "when a signal is input to the controller such that the activation of the fuel cell system is started" or "when the controller outputs a signal to devices constituting the fuel cell system such that the activation of the fuel cell system is started". In other words, the expression "when the fuel cell system is activated" denotes a period from when the signal is input to the controller such that the activation operation of the fuel cell system is started until when the controller causes the devices (for example, the combustor) constituting the fuel cell system to start operating. Therefore, the expression "when the fuel cell system is activated" includes a case where the devices (for example, the combustor) constituting the fuel cell system start operating.

Moreover, for example, in a case where the fuel cell system performs a DSS operation, the expression "when the fuel cell system is activated" may denote an operation start time of the fuel cell system, the operation start time being preset in the controller. Here, the DSS (Daily Start and Stop) operation denotes an operation in which the fuel cell system repeatedly starts and stops everyday, and the fuel cell system starts operating at a predetermined time and stops at a predetermined time or stops after a predetermined time from the operation start time.

### Configuration of Power Generation System

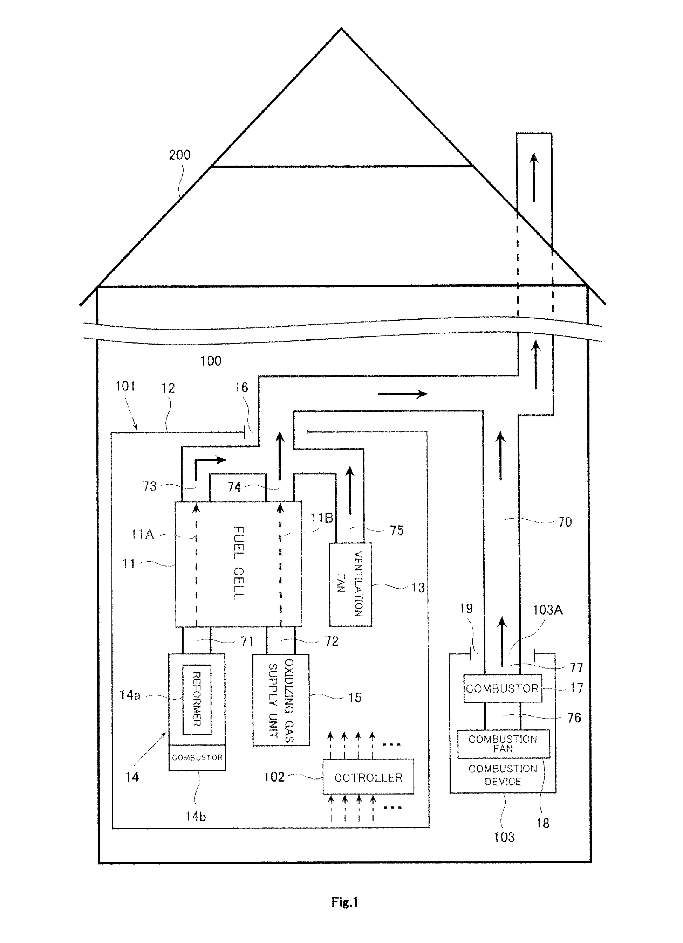

Fig. 1 is a schematic diagram showing the schematic configuration of the power generation system according to Embodiment 1 of the present invention.

As shown in Fig. 1, a power generation system 100 according to Embodiment 1 of the present invention is provided in a building 200. The power generation system 100 includes a fuel cell system 101, a ventilation fan 13, a controller 102, a combustion device 103, and a discharge passage 70. The fuel cell system 101 includes a fuel cell 11, a case 12, a reformer 14a, and a combustor 14b. The discharge passage 70 is formed so as to cause the case 12 of the fuel cell system 101 and an exhaust port 103A of the combustion device 103 to communicate with each other. Then, the controller 102 causes the combustion device 103 to operate when the ventilation fan 13 is in a stop state and then causes the ventilation fan 13 to operate when the fuel cell system 101 is activated.

In Embodiment 1, the power generation system 100 is provided in the building 200. However, the present embodiment is not limited to this. The power generation system 100 may be provided outside the building 200 as long as the discharge passage 70 is formed so as to cause the case 12 of the fuel cell system 101 and the exhaust port 103A of the combustion device 103 to communicate with each other.

The fuel cell 11, the ventilation fan 13, a fuel gas supply unit 14, and an oxidizing gas supply unit 15 are provided in the case 12 of the fuel cell system 101. The controller 102 is also provided in the case 12. In Embodiment 1, the controller 102 is provided in the case 12 of the fuel cell system 101. However, the present embodiment is not limited to this. The controller 102 may be provided in the combustion device 103 or may be provided separately from the case 12 and the combustion device 103.

A hole 16 penetrating a wall constituting the case 12 in a thickness direction of the wall is formed at an appropriate position of the wall. A pipe constituting the discharge passage 70 is inserted through the hole 16 such that a gap is formed between the hole 16 and the discharge passage 70. The gap between the hole 16 and the discharge passage 70 constitutes an air supply port 16. With this, the air outside the power generation system 100 is supplied through the air supply port 16 to the inside of the case 12.

In Embodiment 1, the hole through which the pipe constituting the discharge passage 70 is inserted and the hole constituting the air supply port 16 are constituted by one hole 16. However, the present embodiment is not limited to this. The hole through which the pipe constituting the discharge passage 70 is inserted and the hole constituting the air supply port 16 may be separately formed on the case 12. The air supply port 16 may be constituted by one hole on the case 12 or may be constituted by a plurality of holes on the case 12.

The fuel gas supply unit 14 is configured to supply the fuel gas (hydrogen gas) to the fuel cell 11 while adjusting the flow rate of the fuel gas. Used as the fuel gas supply unit 14 is a hydrogen generator including the reformer 14a configured to generate the fuel gas from a hydrocarbon gas that is a raw material and steam and the combustor 14b configured to heat the reformer 14a. The combustor 14b is constituted by a burner, a combustion catalyst, or the like.

In Embodiment 1, the fuel cell 11 (to be precise, an inlet of a fuel gas channel 11A of the fuel cell 11) is connected to the fuel gas supply unit 14 through a fuel gas supply passage 71.

The oxidizing gas supply unit 15 may have any configuration as long as it can supply an oxidizing gas (air) to the fuel cell 11 while adjusting the flow rate of the oxidizing gas. The oxidizing gas supply unit 15 may be constituted by a fan, a blower, or the like. The fuel cell 11 (to be precise, an inlet of an oxidizing gas channel 11 B of the fuel cell 11) is connected to the oxidizing gas supply unit 15 through an oxidizing gas supply passage 72.

The fuel cell 11 includes an anode and a cathode (both not shown). In the fuel cell 11, the fuel gas supplied to the fuel gas channel 11A is supplied to the anode while the fuel gas is flowing through the fuel gas channel 11 A. The oxidizing gas supplied to the oxidizing gas channel 11B is supplied to the cathode while the oxidizing gas is flowing through the oxidizing gas channel 11B. The fuel gas supplied to the anode and the oxidizing gas supplied to the cathode react with each other to generate electricity and heat.

The generated electricity is supplied to an external electric power load (for example, a home electrical apparatus) by an electric power conditioner, not shown. The generated heat is recovered by a heat medium flowing through a heat medium channel, not shown. The heat recovered by the heat medium can be used to, for example, heat water.

In Embodiment 1, each of various fuel cells, such as a polymer electrolyte fuel cell, a direct internal reforming type solid-oxide fuel cell, and an indirect internal reforming type solid-oxide fuel cell, may be used as the fuel cell 11. In Embodiment 1, the fuel cell 11 and the fuel gas supply unit 14 are configured separately. However, the present embodiment is not limited to this. Like a solid-oxide fuel cell, the fuel gas supply unit 14 and the fuel cell 11 may be configured integrally. In this case, the fuel cell 11 and the fuel gas supply unit 14 are configured as one unit covered with a common heat insulating material, and the combustor 14b can heat not only the reformer 14a but also the fuel cell 11. In the direct internal reforming type solid-oxide fuel cell, since the anode of the fuel cell 11 has the function of the reformer 14a, the anode of the fuel cell 11 and the reformer 14a may be configured integrally. Further, since the configuration of the fuel cell 11 is similar to that of a typical fuel cell, a detailed explanation thereof is omitted.

An upstream end of an off fuel gas passage 73 is connected to an outlet of the fuel gas channel 11A. A downstream end of the off fuel gas passage 73 is connected to the discharge passage 70. An upstream end of an off oxidizing gas passage 74 is connected to an outlet of the oxidizing gas channel 11B. A downstream end of the off oxidizing gas passage 74 is connected to the discharge passage 70.

With this, the fuel gas unconsumed in the fuel cell 11 (hereinafter referred to as an "off fuel gas") is discharged from the outlet of the fuel gas channel 11A through the off fuel gas passage 73 to the discharge passage 70. The oxidizing gas unconsumed in the fuel cell 11 (hereinafter referred to as an "off oxidizing gas") is discharged from the outlet of the oxidizing gas channel 11B through the off oxidizing gas passage 74 to the discharge passage 70. The off fuel gas discharged to the discharge passage 70 is diluted by the off oxidizing gas to be discharged to the outside of the building 200.

The ventilation fan 13 is connected to the discharge passage 70 through a ventilation passage 75. The ventilation fan 13 may have any configuration as long as it can ventilate the inside of the case 12. With this, the air outside the power generation system 100 is supplied through the air supply port 16 to the inside of the case 12. and the gas (mainly, air) in the case 12 is discharged through the ventilation passage 75 and the discharge passage 70 to the outside of the building 200 by activating the ventilation fan 13. Thus, the inside of the case 12 is ventilated.

In Embodiment 1, the fan is used as a ventilator. However, the present embodiment is not limited to this. A blower may be used as the ventilator. The ventilation fan 13 is provided in the case 12. However, the present embodiment is not limited to this. The ventilation fan 13 may be provided in the discharge passage 70. In this case, it is preferable that the ventilation fan 13 be provided upstream of a branch portion of the discharge passage 70.

The combustion device 103 includes a combustor 17 and a combustion fan (combustion air supply unit) 18. The combustor 17 and the combustion fan 18 are connected to each other through a combustion air supply passage 76. The combustion fan 18 may have any configuration as long as it can supply combustion air to the combustor 17. The combustion fan 18 may be constituted by a fan, a blower, or the like.

A combustible gas, such as a natural gas, and a combustion fuel, such as a liquid fuel, are supplied to the combustor 17 from a combustion fuel supply unit, not shown. One example of the liquid fuel is kerosene. The combustor 17 combusts the combustion air supplied from the combustion fan 18 and the combustion fuel supplied from the combustion fuel supply unit to generate heat and a flue gas. The generated heat can be used to heat water. To be specific, the combustion device 103 may be used as a boiler.

An upstream end of an exhaust gas passage 77 is connected to the combustor 17, and a downstream end of the exhaust gas passage 77 is connected to the discharge passage 70. With this, the flue gas generated in the combustor 17 is discharged through the exhaust gas passage 77 to the discharge passage 70. To be specific, the flue gas generated in the combustor 17 is discharged to the discharge passage 70 as the exhaust gas discharged from the combustion device 103. The flue gas discharged to the discharge passage 70 flows through the discharge passage 70 to be discharged to the outside of the building 200.

A hole 19 penetrating a wall constituting the combustion device 103 in a thickness direction of the wall is formed at an appropriate position of the wall. A pipe constituting the discharge passage 70 is inserted through the hole 19 such that a gap is formed between the hole 19 and the discharge passage 70. The gap between the hole 19 and the discharge passage 70 constitutes an air supply port 19. With this, the air outside the power generation system 100 is supplied through the air supply port 19 to the inside of the combustion device 103.

To be specific, the discharge passage 70 branches, and two upstream ends thereof are respectively connected to the hole 16 and the hole 19. The discharge passage 70 is formed to extend up to the outside of the building 200, and a downstream end (opening) thereof is open to the atmosphere. With this, the discharge passage 70 causes the case 12 and the exhaust port 103A of the combustion device 103 to communicate with each other.

In Embodiment 1, the hole through which the pipe constituting the discharge passage 70 is inserted and the hole constituting the air supply port 19 are constituted by one hole 19. However, the present embodiment is not limited to this. The hole through which the pipe constituting the discharge passage 70 is inserted (the hole to which the pipe constituting the discharge passage 70 is connected) and the hole constituting the air supply port 19 may be separately formed on the combustion device 103. The air supply port 19 may be constituted by one hole on the combustion device 103 or may be constituted by a plurality of holes on the combustion device 103.

The controller 102 may be any device as long as it controls respective devices constituting the power generation system 100. The controller 102 includes a calculation processing portion, such as a microprocessor or a CPU, and a storage portion, such as a memory, configured to store programs for executing respective control operations. In the controller 102, the calculation processing portion reads out and executes a predetermined control program stored in the storage portion. Thus, the controller 102 processes the information and performs various control operations, such as the above control operations, regarding the power generation system 100.

The controller 102 may be constituted by a single controller or may be constituted by a group of a plurality of controllers which cooperate to execute control operations of the power generation system 100. For example, the controller 102 may be configured to control the ventilation fan 13, and the other controllers may be configured to control the devices of the power generation system 100 except for the ventilation fan 13. The controller 102 may be constituted by a microcontroller or may be constituted by a MPU, a PLC (Programmable Logic Controller), a logic circuit, or the like.

### Operations of Power Generation System

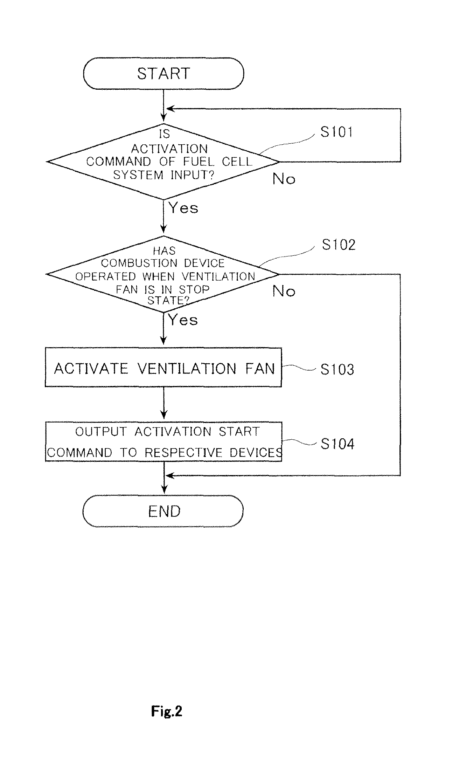

Next, the operations of the power generation system 100 according to Embodiment 1 will be explained in reference to Figs. 1 and 2. Since the electric power generating operation of the fuel cell system 101 of the power generation system 100 is performed in the same manner as the electric power generating operation of a typical fuel cell system, a detailed explanation thereof is omitted. Embodiment 1 is explained on the basis that the controller 102 is constituted by one controller and the controller controls respective devices constituting the power generation system 100.

Fig. 2 is a flow chart schematically showing the activation operation of the fuel cell system of the power generation system according to Embodiment 1.

As shown in Fig. 2, the controller 102 confirms whether or not an activation command of the fuel cell system 101 is input (Step S101). Here, examples of a case where the activation command of the fuel cell system 101 is input are a case where a user of the power generation system 100 operates a remote controller, not shown, to instruct the activation of the fuel cell system 101 and a case where a preset operation start time of the fuel cell system 10 has come.

In a case where the activation command of the fuel cell system 101 is not input (No in Step S101), the controller 102 repeats Step S101 until the activation command of the fuel cell system 101 is input. In contrast, in a case where the activation command of the fuel cell system 101 is input (Yes in Step S101), the controller 102 proceeds to Step S102.

In Step S102, the controller 102 determines whether or not the combustion device 103 has operated when the ventilation fan 13 is in a stop state. Specifically, for example, based on whether or not a storage portion, not shown, stores information that the activation command of the combustion device 103 has been output after a stop command of the ventilation fan 13 has been output, the controller 102 can determine whether or not the combustion device 103 has operated when the ventilation fan 13 is in a stop state. Whether or not the operation of the combustion device 103 is continuing while the present program is being executed does not matter.

In a case where the combustion device 103 has not operated when the ventilation fan 13 is in a stop state (No in Step S102), the controller 102 can consider that the exhaust gas from the combustion device 103 has not flowed into the case 12. Therefore, the present program is terminated. In contrast, in a case where the combustion device 103 has operated when the ventilation fan 13 is in a stop state (Yes in Step S102), the controller 102 proceeds to Step S 103.

In Step S103, the controller 102 activates the ventilation fan 13. With this, the gas in the case 12 flows through the ventilation passage 75 and the discharge passage 70 to be discharged to the outside of the building 200. In addition, the air outside the case 12 flows through the air supply port 16 into the case 12.

It is preferable that when the combustion device 103 is operating, the controller 102 control an operation amount of the ventilation fan 13 such that the gas in the case 12 is discharged to the discharge passage 70. Specifically, the controller 102 controls the operation amount of the ventilation fan 13 such that an air flow rate of the ventilation fan 13 becomes equal to or higher than a predetermined first air flow rate. Here, the first air flow rate is obtained in advance by experiments or the like and may be, for example, the highest air flow rate of the combustion fan 18 or the flow rate of the exhaust gas at the time of a steady operation of the combustion device 103.

Next, the controller 102 outputs an activation start command to each of devices constituting the fuel cell system 101 (Step S104) and terminates the present program. With this, the activation operation of the fuel cell system 101 is started. Specifically, the combustion fuel (for example, a natural gas) and the combustion air are supplied to the combustor 14a of the fuel gas supply unit 14. The combustor 14a combusts the combustion fuel and the combustion air to generate the flue gas. The reformer 14a is heated by heat transfer from the generated flue gas. Then, when the temperature of the reformer 14a reaches a temperature at which the raw material (for example, hydrocarbon, such as methane) can be reformed, the raw material and the steam are supplied to the reformer 14a. The reformer 14a causes a reforming reaction between the supplied raw material and steam to generate the fuel gas. The generated fuel gas is supplied through the fuel gas supply passage 71 to the fuel cell 11 (to be precise, the fuel gas channel 11 A). The oxidizing gas is supplied from the oxidizing gas supply unit 15 through the oxidizing gas supply passage 72 to the fuel cell 11 (to be precise, the oxidizing gas channel 11B).

As above, in the power generation system 100 according to Embodiment 1, even if the exhaust gas from the combustion device 103 flows through the discharge passage 70 into the case 12 by operating the combustion device 103 when the ventilation fan 13 is in a stop state, the exhaust gas in the case 12 can be discharged to the outside of the case 12 by operating the ventilation fan 13 when the fuel cell system 101 is activated.

Therefore, in the power generation system 100 according to Embodiment 1, since the inside of the case 12 is ventilated, the decrease in the oxygen concentration in the case 12 and the ignition failure of the combustor 14a can be suppressed, and the reliability of the power generation system 100 can be improved.

Here, in a case where a desulfurizer configured to desulfurize a sulfur compound contained in a natural gas or the like is not provided in the combustion device 103, SOₓ is generated by the combustion operation of the combustion device 103. Then, if the generated SOₓ flows through the discharge passage 70 into the case 12 to be supplied to the reformer 14a of the fuel gas supply unit 14 together with the combustion air, the poisoning of the catalyst contained in the reformer 14a may be accelerated.

However, in the power generation system 100 according to Embodiment 1, as described above, the exhaust gas (containing SOₓ) from the combustion device 103 is discharged to the outside of the case 12. Therefore, the SOₓ is prevented from being supplied to the reformer 14a. On this account, the poisoning of the reformer 14a and the decrease in the efficiency of the reforming of the reformer 14a can be suppressed, and the durability of the power generation system 100 can be improved.

In Embodiment 1, the discharge passage 70, the off fuel gas passage 73, the off oxidizing gas passage 74, and the exhaust gas passage 77 are explained as different passages. However, the present embodiment is not limited to this. These passages may be regarded as one discharge passage 70.

In Embodiment 1, as a method of determining by the controller 102 whether or not the combustion device 103 has operated, the method of determining whether or not the combustion device 103 has operated by determining whether or not the information that the activation command of the combustion device 103 is output is stored is exemplified. However, the present embodiment is not limited to this. Examples of the method of determining whether or not the combustion device 103 has operated are a method of utilizing information (data or signal) output from the combustion device 103 and a method of utilizing information (data or signal) input to the combustion device 103.

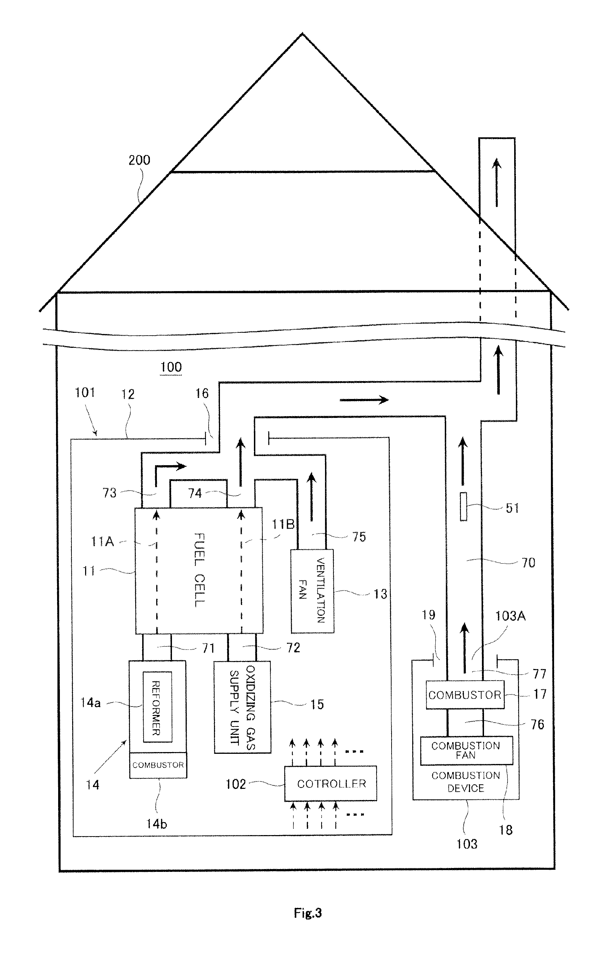

One example of the method of utilizing the output information is a method of utilizing information from an operation detector configured to detect that the combustion device 103 has operated. Hereinafter, cases where the operation detector is a temperature detector, the operation detector is a pressure detector, the operation detector is a gas concentration detector, and the operation detector is a sound detector will be explained in reference to Figs. 3 to 6.

Fig. 3 is a schematic diagram showing an example in which the temperature detector is used as the operation detector in the power generation system shown in Fig. 1.

As shown in Fig. 3, a temperature sensor 51 is provided on at least one of the discharge passage 70, the off fuel gas passage 73, the off oxidizing gas passage 74, and the ventilation passage 75 (in Fig. 3, the temperature sensor 51 is provided on the discharge passage 70), and based on a temperature detected by the temperature sensor 51, the controller 102 determines whether or not the combustion device 103 has operated.

Specifically, the temperature sensor 51 detects the temperature of the exhaust gas flowing through the passage (herein, the discharge passage 70) and outputs the detected temperature to the controller 102. In a case where the input temperature is equal to or higher than a predetermined threshold temperature T1 or in a case where a difference between the temperatures before and after a predetermined time is equal to or higher than a predetermined threshold temperature T2, the controller 102 determines that the combustion device 103 has operated.

Here, the predetermined threshold temperature T1 is a temperature value obtained in advance by experiments or the like and is suitably set depending on the installation location of the temperature sensor 51. Similarly, the predetermined threshold temperature T2 is a temperature value obtained in advance by experiments or the like and is suitably set depending on the installation location of the temperature sensor 51.

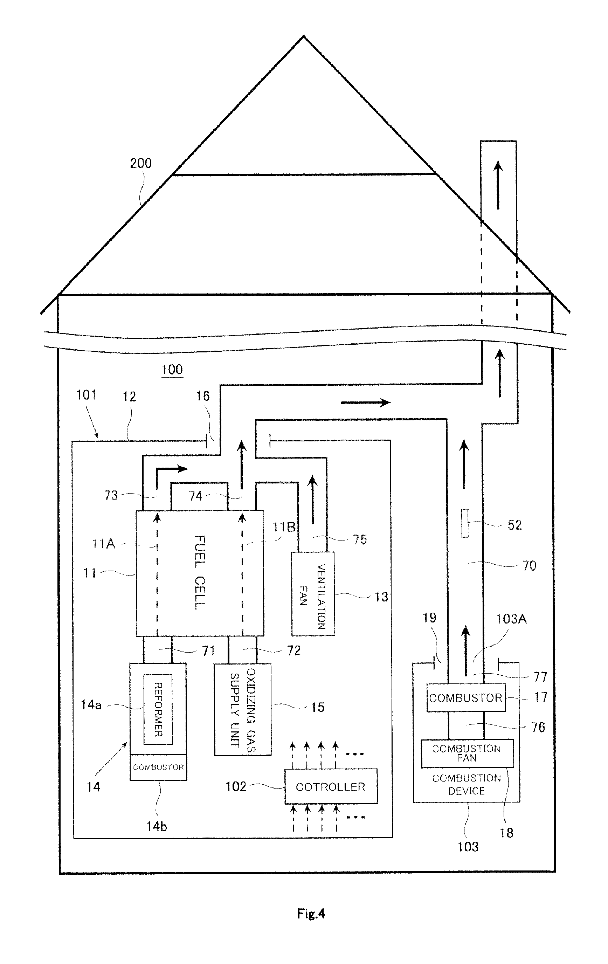

Fig. 4 is a schematic diagram showing an example in which the pressure detector is used as the operation detector in the power generation system shown in Fig. 1.

As shown in Fig. 4, a pressure sensor 52 is provided on at least one of the discharge passage 70, the off fuel gas passage 73, the off oxidizing gas passage 74, and the ventilation passage 75 (in Fig. 4, the pressure sensor 52 is provided on the discharge passage 70), and based on a pressure detected by the pressure sensor 52, the controller 102 determines whether or not the combustion device 103 has operated. Specifically, the pressure sensor 52 detects the pressure in the passage (herein, the discharge passage 70) and outputs the detected pressure to the controller 102. In a case where the input pressure is equal to or higher than a predetermined threshold pressure P1 or in a case where a difference between the pressures before and after a predetermined time is equal to or higher than a predetermined threshold pressure P2, the controller 102 determines that the combustion device 103 has operated.

Here, the predetermined threshold pressure P1 is a pressure value obtained in advance by experiments or the like and is suitably set depending on the installation location of the pressure sensor 52. Similarly, the predetermined threshold pressure P2 is a pressure value obtained in advance by experiments or the like and is suitably set depending on the installation location of the pressure sensor 52.

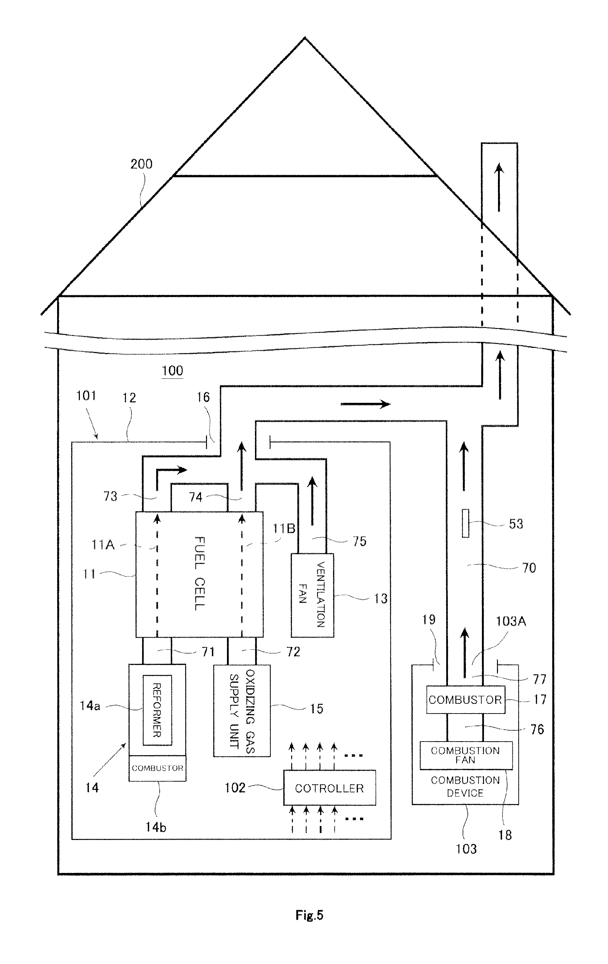

Fig. 5 is a schematic diagram showing an example in which the gas concentration detector is used as the operation detector in the power generation system shown in Fig. 1.

As shown in Fig. 5, a gas concentration sensor 53 is provided on at least one of the discharge passage 70, the off fuel gas passage 73, the off oxidizing gas passage 74, and the ventilation passage 75 (in Fig. 5, the gas concentration sensor 53 is provided on the discharge passage 70), and based on an exhaust gas (for example, CO₂ or SOₓ) concentration detected by the gas concentration sensor 53, the controller 102 determines whether or not the combustion device 103 has operated. Specifically, the gas concentration sensor 53 detects the concentration of the exhaust gas in the passage (herein, the discharge passage 70) and outputs the detected concentration of the exhaust gas to the controller 102. In a case where the input concentration of the exhaust gas is equal to or higher than a predetermined threshold concentration C1 or in a case where a difference between the concentrations before and after a predetermined time is equal to or higher than a predetermined threshold concentration C2, the controller 102 determines that the combustion device 103 has operated.

Here, the predetermined threshold concentration C1 is a concentration value obtained in advance by experiments or the like and can be suitably calculated from, for example, the concentration of hydrocarbons contained in the combustion fuel supplied to the combustion device 103 and the number of carbons contained in the combustion fuel supplied to the combustion device 103 or the concentration of sulfur constituents contained in the combustion fuel supplied to the combustion device 103. Similarly, the predetermined threshold concentration C2 is a concentration value obtained in advance by experiments or the like and can be suitably calculated from, for example, the concentration of hydrocarbons contained in the combustion fuel supplied to the combustion device 103 and the number of carbons contained in the combustion fuel supplied to the combustion device 103 or the concentration of sulfur constituents contained in the combustion fuel supplied to the combustion device 103.

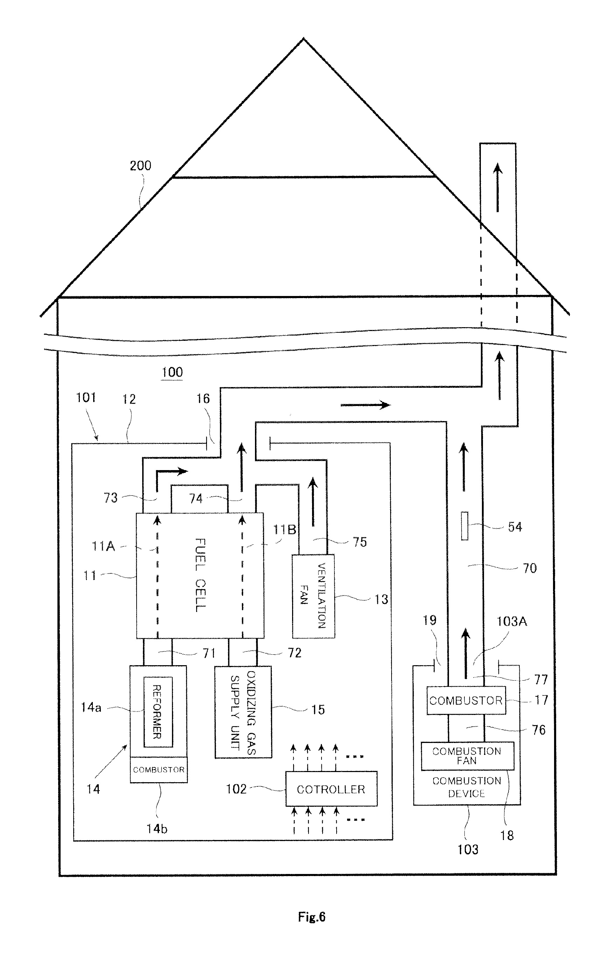

Fig. 6 is a schematic diagram showing an example in which the sound detector is used as the operation detector in the power generation system shown in Fig. 1.

As shown in Fig. 6, one example is a method in which: a sound sensor 54 is provided on at least one of the discharge passage 70, the off fuel gas passage 73, the off oxidizing gas passage 74, and the ventilation passage 75 (in Fig. 6, the sound sensor 54 is provided on the discharge passage 70); and based on a sound pressure detected by the sound sensor 54, the controller 102 determines whether or not the combustion device 103 has operated. Specifically, when the ventilation fan 13 is in a stop state, the sound sensor 54 detects the sound pressure transmitting in the passage (herein, the discharge passage 70) and outputs the detected sound pressure to the controller 102. In a case where the input sound pressure is equal to or higher than a predetermined threshold sound pressure SP1 or in a case where a difference between the sound pressures before and after a predetermined time is equal to or higher than a predetermined threshold sound pressure SP2, the controller 102 determines that the combustion device 103 has operated.

Here, the predetermined threshold sound pressure SP1 is a sound pressure value (pressure value) or sound pressure level obtained in advance by experiments or the like and is suitably set depending on the installation location of the sound sensor 54. Similarly, the predetermined threshold sound pressure SP2 is a sound pressure value (pressure value) or sound pressure level obtained in advance by experiments or the like and is suitably set depending on the installation location of the sound sensor 54.

In contrast, one example of the method of utilizing the input information is a method in which: a flow rate detector (gas meter) configured to detect the flow rate of the combustion fuel (for example, a natural gas) supplied to the combustion device 103 is provided; and whether or not the combustion device 103 has operated is determined based on the flow rate detected by the flow rate detector. Specifically, the flow rate detector detects the flow rate of the combustion fuel supplied to the combustion device 103 and outputs the detected flow rate to the controller 102. In a case where the input flow rate is equal to or higher than a predetermined threshold flow rate F1 or in a case where a difference between the flow rates before and after a predetermined time is equal to or higher than a predetermined threshold flow rate F2, the controller 102 determines that the combustion device 103 has operated.

Another example is a method in which: an electric power detector (at least one of a voltage detector and a current detector) configured to detect electric power supplied to the combustion device 103 is provided; and whether or not the combustion device 103 has operated is determined based on an electric power value (a voltage value or a current value) detected by the electric power detector. Specifically, the electric power detector detects the electric power value that is the value of the electric power supplied to the combustion device 103 and outputs the detected electric power value to the controller 102. In a case where the input electric power value is equal to or higher than a predetermined threshold electric power value E1 or in a case where a difference between the electric power values before and after a predetermined time is equal to or higher than a predetermined threshold electric power value E2, the controller 102 determines that the combustion device 103 has operated.

Yet another example is a method in which in a case where a remote controller configured to command the operation of the combustion device 103 by a user is provided, the controller 102 determines whether or not the combustion device 103 has operated, based on information regarding whether or not the operation of the combustion device 103 is commanded from the remote controller. Specifically, in a case where the controller 102 obtains information that an operation command is output from the remote controller to the combustion device 103, the controller 102 determines that the combustion device 103 has operated.

An example other than the above examples is a method in which in a case where the combustion device 103 is used as a boiler, a temperature sensor is provided on a water passage through which water heated by the combustion device 103 flows, and whether or not the combustion device 103 has operated is determined based on the temperature detected by the temperature sensor. Specifically the temperature sensor detects the temperature of the water flowing through the water passage and outputs the detected temperature to the controller 102. Specifically, in a case where the input temperature is equal to or higher than a predetermined threshold temperature T3 or in a case where a difference between the temperatures before and after a predetermined time is equal to or higher than a predetermined threshold temperature T4, the controller 102 can determine that the heat is being supplied from the combustion device 103. Thus, the controller 102 determines that the combustion device 103 has operated.

### Modification Example

Next, Modification Example of the power generation system 100 according to Embodiment 1 will be explained.

The power generation system of Modification Example includes an air intake passage formed to cause the case and the combustion device to communicate with each other and configured to supply air to the fuel cell system and the combustion device from outside, and the air intake passage is formed so as to be heat-exchangeable with the exhaust passage.

Here, the expression "the air intake passage is formed so as to be heat-exchangeable with the discharge passage" denotes that the air intake passage and the discharge passage do not have to contact each other and may be spaced apart from each other to a level that the gas in the air intake passage and the gas in the exhaust passage are heat-exchangeable with each other. Therefore, the air intake passage and the discharge passage may be formed with a space therebetween. Or, one of the air intake passage and the discharge passage may be formed inside the other. To be specific, a pipe constituting the air intake passage and a pipe constituting the exhaust passage may be formed as a double pipe.

### Configuration of Power Generation System

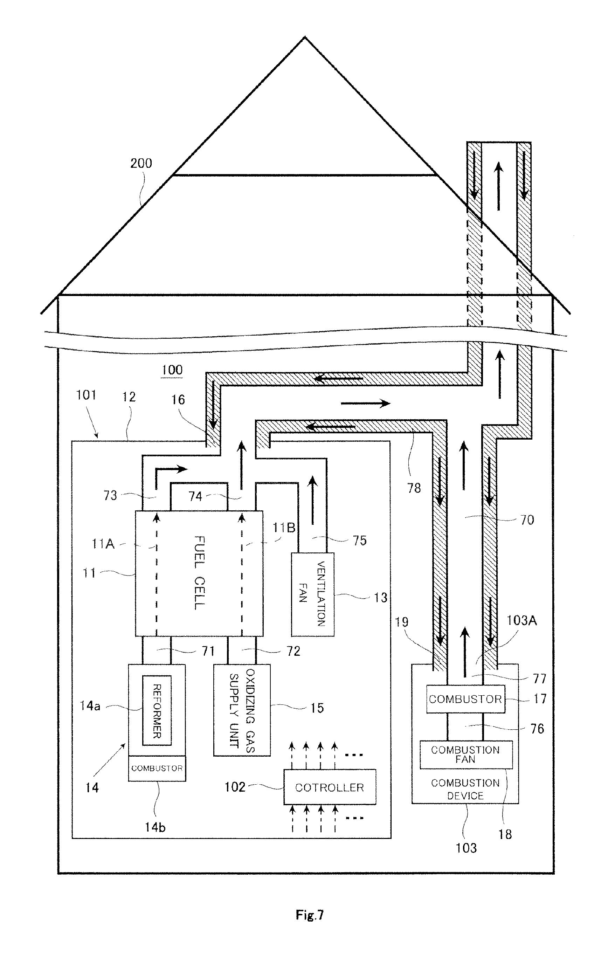

Fig. 7 is a schematic diagram showing the schematic configuration of the power generation system of Modification Example of Embodiment 1. In Fig. 7, the air intake passage is shown by hatching.

As shown in Fig. 7, the power generation system 100 of Modification Example is the same in basic configuration as the power generation system 100 according to Embodiment 1 but is different from the power generation system 100 according to Embodiment 1 in that an air intake passage 78 is formed. Specifically, the air intake passage 78 is formed so as to: cause the combustion device 103 and the case 12 of the fuel cell system 101 to communicate with each other: supply air to the combustion device 103 and the fuel cell system 101 from the outside (herein, the outside of the building 200); and surround an outer periphery of the discharge passage 70. To be specific, the air intake passage 78 and the discharge passage 70 are constituted by a so-called double pipe.

More specifically, the air intake passage 78 branches, and two upstream ends thereof are respectively connected to the hole 16 and the hole 19. The air intake passage 78 is formed to extend up to the outside of the building 200, and a downstream end (opening) thereof is open to the atmosphere. With this, the air intake passage 78 causes the case 12 and the combustion device 103 to communicate with each other, and the air can be supplied from the outside of the power generation system 100 to the fuel cell system 101 and the combustion device 103.

The power generation system 100 of Modification Example configured as above also has the same operational advantages as the power generation system 100 according to Embodiment 1.

### Embodiment 2

In the power generation system according to Embodiment 2 of the present invention, when the fuel cell system is activated, the controller causes the ventilator to discharge to the discharge passage a gas having a volume equal to or larger than the volume of the case.

Since the configuration of the power generation system 100 according to Embodiment 2 of the present invention is the same as that of the power generation system 100 according to Embodiment 1, an explanation thereof is omitted.

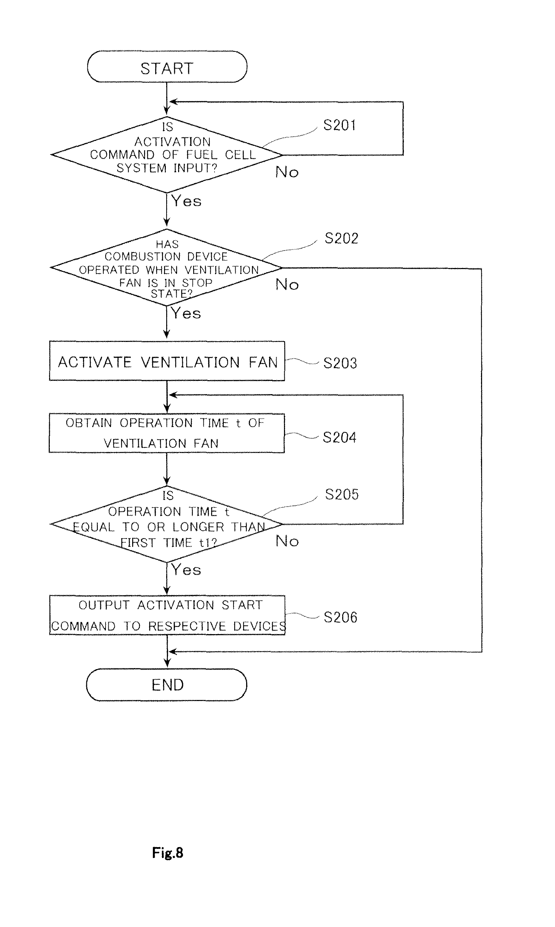

Fig. 8 is a flow chart schematically showing the activation operation of the fuel cell system of the power generation system according to Embodiment 2.

As shown in Fig. 8, Steps S201 to S203 in the power generation system 100 according to Embodiment 2 are respectively the same as Steps S101 to S 103 of the activation operation of the fuel cell system 101 of the power generation system 100 according to Embodiment 1.

When the ventilation fan 13 is activated in Step S203, the controller 102 obtains an operation time t of the ventilation fan 13 (Step S204). Next, the controller 102 determines whether or not the operation time t obtained in Step S204 is equal to or longer than a first time t1 (Step S205). Here, the first time t1 is a time necessary to discharge the gas having a volume equal to or larger than the volume of the case 12 through the ventilation passage 75 and the discharge passage 70 to the outside of the building 200 and is suitably set depending on the operation amount of the ventilation fan 13.

In a case where the operation time t obtained in Step S204 is shorter than the first time t1 (No in Step S205), the controller 102 returns to Step S204 and repeats Steps S204 and S205 until the operation time t becomes equal to or longer than the first time t1. In contrast, in a case where the operation time t obtained in Step S204 is equal to or longer than the first time t1 (Yes in Step S205), the controller 102 proceeds to Step S206.

In Step S206, the controller 102 outputs the activation start command to each of the devices constituting the fuel cell system 101 and terminates the present program. With this, the activation operation of the fuel cell system 101 is started.

As above, in the power generation system 100 according to Embodiment 2, the controller 102 controls the ventilation fan 13 such that the gas having a volume equal to or larger than the volume of the case 12 is discharged to the discharge passage 70. With this, the exhaust gas in the case 12 from the combustion device 103 can be discharged to the outside of the case 12 and therefore to the outside of the building 200. Therefore, in the power generation system 100 according to Embodiment 2, the ignition failure of the reformer 14a of the fuel gas supply unit 14 can be suppressed, and the reliability of the power generation system 100 can be improved.

### Embodiment 3

The power generation system according to Embodiment 3 of the present invention is configured such that the fuel cell system further includes a hydrogen generator including a reformer configured to generate a hydrogen-containing gas from a raw material and steam and a combustor configured to heat the reformer.

### Configuration of Power Generation System

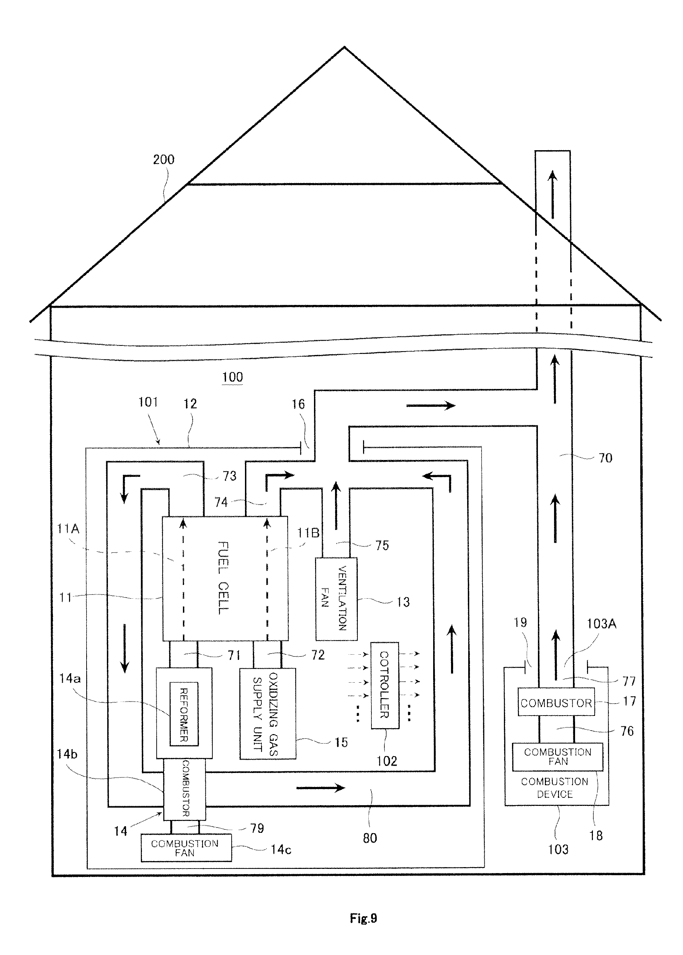

Fig. 9 is a schematic diagram showing the schematic configuration of the power generation system according to Embodiment 3 of the present invention.

As shown in Fig. 9, the power generation system 100 according to Embodiment 3 of the present invention is the same in basic configuration as the power generation system 100 according to Embodiment 1 but is different from the power generation system 100 according to Embodiment 1 in that: the fuel gas supply unit 14 is constituted by a hydrogen generator 14; and the off fuel gas passage 73 is connected to the combustor 14b of the hydrogen generator 14. Specifically, the hydrogen generator 14 includes the reformer 14a and the combustor 14b.

The downstream end of the off fuel gas passage 73 is connected to the combustor 14b. The off fuel gas flows from the fuel cell 11 through the off fuel gas passage 73 to be supplied to the combustor 14b as the combustion fuel. A combustion fan 14c is connected to the combustor 14b through an air supply passage 79. The combustion fan 14c may have any configuration as long as it can supply the combustion air to the combustor 14b. For example, the combustion fan 14c may be constituted by a fan, a blower, or the like.

The combustor 14b combusts the supplied off fuel gas and combustion air to generate the flue gas and heat. The flue gas generated in the combustor 14b heats the reformer 14a and the like, and then, is discharged to a flue gas passage 80. The flue gas discharged to the flue gas passage 80 flows through the flue gas passage 80 to be discharged to the discharge passage 70. The flue gas discharged to the discharge passage 70 flows through the discharge passage 70 to be discharged to the outside of the power generation system 100 (the building 200).

A raw material supply unit and a steam supply unit (both not shown) are connected to the reformer 14a, and the raw material and the steam are supplied to the reformer 14a. Examples of the raw material are a natural gas containing methane as a major component and a LP gas containing propane as a major component.

The reformer 14a includes a reforming catalyst. The reforming catalyst may be any material as long as, for example, it can serve as a catalyst in a steam-reforming reaction by which the hydrogen-containing gas is generated from the raw material and the steam. Examples of the reforming catalyst are a ruthenium-based catalyst in which a catalyst carrier, such as alumina, supports ruthenium (Ru) and a nickel-based catalyst in which the same catalyst carrier as above supports nickel (Ni). A catalyst capable of performing an autothermal reforming reaction may be used as the reforming catalyst of the reformer 14a.

In the reformer 14a, the hydrogen-containing gas is generated by the reforming reaction between the supplied raw material and steam. The generated hydrogen-containing gas flows as the fuel gas through the fuel gas supply passage 71 to be supplied to the fuel gas channel 11A of the fuel cell 11.

Embodiment 3 is configured such that the hydrogen-containing gas generated in the reformer 14a is supplied as the fuel gas to the fuel cell 11. However, the present embodiment is not limited to this. Embodiment 3 may be configured such that the hydrogen-containing gas flowed through a shift converter or carbon monoxide remover provided in the hydrogen generator 14 is supplied to the fuel cell 11, the shift converter including a shift catalyst (such as a copper-zinc-based catalyst) for reducing carbon monoxide in the hydrogen-containing gas supplied from the reformer 14a, the carbon monoxide remover including an oxidation catalyst (such as a ruthenium-based catalyst) or a methanation catalyst (such as a ruthenium-based catalyst).

The activation operation of the fuel cell system 101 of the power generation system 100 according to Embodiment 3 is performed in the same manner as the activation operation of the fuel cell system 101 of the power generation system 100 according to Embodiment 1. However, since the fuel gas supply unit 14 is constituted by a hydrogen generator, operations after the activation start command is output to each of the devices constituting the fuel cell system 101 in Step S 104 are as below.

To be specific, when the activation start command is output from the controller 102, the combustion air is supplied from the combustion fan 14c to the combustor 14b. In addition, the combustion fuel (for example, a material gas) is supplied from a material gas supply unit, not shown, to the combustor 14b. Then, the combustor 14b combusts the combustion fuel and the combustion air to generate the flue gas. The flue gas generated in the combustor 14b heats the reformer 14a and the like and then flows through the flue gas passage 80 and the discharge passage 70 to be discharged to the outside of the building 200.

Next, the raw material (for example, hydrocarbon of a natural gas) and the steam are supplied to the reformer 14a, and the hydrogen-containing gas is generated by the steam-reforming reaction. The generated hydrogen-containing gas flows as the fuel gas through the fuel gas supply passage 71 to be supplied to the fuel gas channel 11A of the fuel cell 11. In addition, the oxidizing gas (air) is supplied from the oxidizing gas supply unit 15 through the oxidizing gas supply passage 72 to the oxidizing gas channel 11B. In the fuel cell 11, the supplied fuel gas and oxidizing gas electrochemically react with each other. Thus, electricity and heat are generated.

The fuel gas unconsumed in the fuel cell 11 flows through the off fuel gas passage 73 to be supplied to the combustor 14b. The oxidizing gas unconsumed in the fuel cell 11 Hows through the off fuel gas passage 73 and the discharge passage 70 to be discharged to the outside of the building 200.

The power generation system 100 according to Embodiment 3 configured as above also has the same operational advantages as the power generation system 100 according to Embodiment 1. In addition, the inside of the case 12 is ventilated. Therefore, the decrease in the oxygen concentration in the case 12 and the ignition failure of the combustor 14b of the hydrogen generator 14 can be suppressed, and the reliability of the power generation system 100 can be improved.

In Embodiments 1 to 3 (including Modification Examples), the ventilation fan 13 is used as a ventilator. However, these embodiments are not limited to this. For example, in a case where the fuel gas supply unit 14 is constituted by a hydrogen generator and the hydrogen generator includes the combustor 14b and the combustion fan 14c, the combustion fan 14c may be used as a ventilator instead of the ventilation fan 13.

Further, as a ventilator, the ventilation fan 13 and the oxidizing gas supply unit 15 may be used at the same time, the ventilation fan 13 and the combustion fan 14c may be used at the same time, the combustion fan 14c and the oxidizing gas supply unit 15 may be used at the same time, or the ventilation fan 13, the combustion fan 14c, and the oxidizing gas supply unit 15 may be used at the same time.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention. In addition, various inventions can be made by suitable combinations of a plurality of components disclosed in the above embodiments.

### Industrial Applicability

According to the power generation system of the present invention and the method of operating the power generation system, the ignition failure of the combustor of the fuel cell system can be suppressed, and the reliability of the power generation system can be improved. Therefore, the power generation system of the present invention and the method of operating the power generation system are useful in the field of fuel cells.

### Reference Signs List

- 11: fuel cell
- 11A: fuel gas channel
- 11B: oxidizing gas channel
- 12: case
- 13: ventilation fan
- 14: fuel gas supply unit
- 14a: reformer
- 14b: combustor
- 14c: combustion fan
- 15: oxidizing gas supply unit
- 16: air supply port
- 17: combustor
- 18: combustion fan
- 19: air supply port
- 70: discharge passage
- 71: fuel gas supply passage
- 72: oxidizing gas supply passage
- 73: off fuel gas passage
- 74: off oxidizing gas passage
- 75: ventilation passage
- 76: combustion air supply passage
- 77: exhaust gas passage
- 78: air intake passage
- 79: air supply passage
- 80: flue gas passage
- 100: power generation system
- 101: fuel cell system
- 102: controller
- 103: combustion device
- 103A: exhaust port
- 200: building

## Claims

1. A power generation system comprising:
a fuel cell system including a fuel cell (11) configured to generate electric power using a fuel gas and an oxidizing gas, a case (12) configured to house the fuel cell (11), a reformer (14a) configured to generate the fuel gas from a raw material and steam, and a combustor (14b) configured to heat the reformer (14a);
an oxidizing gas supply unit configured to supply the oxidizing gas to the fuel cell (11);
a ventilator;
a controller (102);
a combustion device (103);
a discharge passage (70) formed to cause the case (12) and an exhaust port (103A) of the combustion device (103) to communicate with each other and configured to discharge an exhaust gas from the fuel cell system and an exhaust gas from the combustion device (103) to an atmosphere through an opening of the discharge passage (70), the opening being open to the atmosphere, and
an operation detector configured to detect that the combustion device (103) has operated,
wherein:
the ventilator is configured to discharge a gas in the case (12) to the discharge passage (70) to ventilate an inside of the case (12); and
**characterized in that**
the controller (102) is configured to cause the combustion device (103) to operate when the ventilator is in a stop state and then cause the ventilator to operate when the fuel cell system is activated, and
wherein in a case where the operation detector detects that the combustion device (103) has operated when the ventilator is in a stop state, the controller (102) is configured to cause the ventilator to operate when the fuel cell system is activated.

2. The power generation system according to claim 1, wherein the controller (102) is configured to cause the combustor to operate after the controller (102) causes the ventilator to operate.

3. The power generation system according to claim 1, wherein the controller (102) is configured to cause the ventilator to discharge a gas having a volume equal to or larger than a volume of the case to the discharge passage (70) when the fuel cell system is activated.

4. The power generation system according to any one of claims 1 to 3, wherein
the controller (102) is configured to cause the oxidizing gas supply unit to supply the oxidizing gas to the fuel cell after the controller (102) causes the ventilator to operate.

5. The power generation system according to claim 1, wherein:
the combustion device (103) includes a combustion air supply unit configured to supply combustion air; and
when the combustion device (103) is operating, the controller (102) is configured to control the ventilator such that an air flow rate of the ventilator becomes equal to or
higher than a predetermined first air flow rate.

6. The power generation system according to any one of claims 1 to 5, further comprising
an air intake passage (78) formed to cause the case (12) and the combustion device (103) to communicate with each other and configured to supply air to the fuel cell system and the combustion device (103) through an opening of the air intake passage (78), the opening being open to the atmosphere, wherein
the air intake passage (78) is formed so as to be heat-exchangeable with the exhaust passage.

7. The power generation system according to claim 1, wherein the operation detector is at least one of a temperature detector, a pressure detector, a gas concentration detector, and a sound detector.

8. A method of operating a power generation system,
the power generation system comprising:
a fuel cell system including a fuel cell (11) configured to generate electric power using a fuel gas and an oxidizing gas, a case (12) configured to house the fuel cell (11), a reformer (14a) configured to generate the fuel gas from a raw material and steam, and a combustor (14b) configured to heat the reformer (14a);an oxidizing gas supply unit configured to supply the oxidizing gas to the fuel cell (11);
a ventilator;
a combustion device (103); and
a discharge passage (70) formed to cause the case (12) and an exhaust port (103A) of the combustion device (103) to communicate with each other and configured to discharge an exhaust gas from the fuel cell system and an exhaust gas from the combustion device (103) to an atmosphere through an opening of the discharge passage (70), the opening being open to the atmosphere, and
an operation detector configured to detect that the combustion device (103) has operated,
wherein:
the ventilator is configured to discharge a gas in the case (12) to the discharge passage (70) to ventilate an inside of the case (12); and
**characterized in that**
the combustion device (103) operates when the ventilator is in a stop state, and then, the ventilator operates when the fuel cell system is activated, and
wherein in a case where the operation detector detects that the combustion device (103) has operated when the ventilator is in a stop state, the controller (102) is configured to cause the ventilator to operate when the fuel cell system is activated.

## Patentansprüche

1. Energieerzeugungssystem, umfassend:
ein Brennstoffzellensystem, das beinhaltet: eine Brennstoffzelle (11), die dafür ausgelegt ist, elektrische Energie unter Verwendung eines Brennstoffgases und eines Oxidationsgases zu erzeugen, ein Gehäuse (12), das dafür ausgelegt ist, die Brennstoffzelle (11) einzuhausen, einen Reformer (14a), der dafür ausgelegt ist, das Brennstoffgas aus einem Rohmaterial und Dampf zu erzeugen, und einen Verbrenner (14b), der dafür ausgelegt ist, den Reformer (14a) zu erwärmen;
eine Oxidationsgaszuleiteinheit, die dafür ausgelegt ist, das Oxidationsgas der Brennstoffzelle (11) zuzuleiten;
einen Ventilator;
eine Steuerung (102);
eine Verbrennungsvorrichtung (103);
einen Abgabedurchlass (70), der dafür ausgebildet ist zu veranlassen, dass das Gehäuse (12) und ein Auslassanschluss (103A) der Verbrennungsvorrichtung (103) miteinander kommunizieren, und dafür ausgelegt ist, ein Auslassgas aus dem Brennstoffzellensystem und ein Auslassgas aus der Verbrennungsvorrichtung (103) an eine Atmosphäre durch eine Öffnung des Abgabedurchlasses (70) abzugeben, wobei die Öffnung zur Atmosphäre offen ist, und
einen Arbeitsdetektor, der dafür ausgelegt ist zu erfassen, dass die Verbrennungsvorrichtung (103) gearbeitet hat,
wobei der Ventilator dafür ausgelegt ist, ein Gas in dem Gehäuse (12) an den Abgabedurchlass (70) abzugeben, um ein Inneres des Gehäuses (12) zu belüften;
**dadurch gekennzeichnet, dass**
die Steuerung (102) dafür ausgelegt ist zu veranlassen, dass die Verbrennungsvorrichtung (103) arbeitet, wenn der Ventilator in einem Stopp-Zustand ist, und sodann zu veranlassen, dass der Ventilator arbeitet, wenn das Brennstoffzellensystem aktiviert ist,
wobei in einem Fall, in dem der Arbeitsdetektor erfasst, dass die Verbrennungsvorrichtung (103) gearbeitet hat, wenn der Ventilator in einem Stopp-Zustand ist, die Steuerung (102) dafür ausgelegt ist zu veranlassen, dass der Ventilator arbeitet, wenn das Brennstoffzellensystem aktiviert ist.

2. Energieerzeugungssystem nach Anspruch 1, wobei die Steuerung (102) dafür ausgelegt ist zu veranlassen, dass der Verbrenner arbeitet, nachdem die Steuerung (102) veranlasst, dass der Ventilator arbeitet.

3. Energieerzeugungssystem nach Anspruch 1, wobei die Steuerung (102) dafür ausgelegt ist zu veranlassen, dass der Ventilator ein Gas mit einem Volumen größer oder gleich einem Volumen des Gehäuses an den Abgabedurchlass (70) abgibt, wenn das Brennstoffzellensystem aktiviert ist.

4. Energieerzeugungssystem nach einem der Ansprüche 1 bis 3, wobei:
die Steuerung (102) dafür ausgelegt ist zu veranlassen, dass die Oxidationsgaszuleiteinheit das Oxidationsgas der Brennstoffzelle zuleitet, nachdem die Steuerung (102) veranlasst, dass der Ventilator arbeitet.

5. Energieerzeugungssystem nach Anspruch 1, wobei:
die Verbrennungsvorrichtung (103) eine Verbrennungsluftzuleiteinheit beinhaltet, die dafür ausgelegt ist, Verbrennungsluft zuzuleiten; und
dann, wenn die Verbrennungsvorrichtung (103) arbeitet, die Steuerung (102) dafür ausgelegt ist, den Ventilator derart zu steuern, dass eine Luftstromrate des Ventilators größer oder gleich einer vorbestimmten ersten Luftstromrate wird.

6. Energieerzeugungssystem nach einem der Ansprüche 1 bis 5, des Weiteren umfassend:
einen Lufteinlassdurchlass (78), der dafür ausgebildet ist zu veranlassen, dass das Gehäuse (12) und die Verbrennungsvorrichtung (103) miteinander kommunizieren, und
dafür ausgelegt ist, Luft dem Brennstoffzellensystem und der Verbrennungsvorrichtung (103) durch eine Öffnung des Lufteinlassdurchlasses (78) zuzuleiten, wobei die Öffnung zur Atmosphäre offen ist, wobei:
der Lufteinlassdurchlass (78) wärmetauschfähig mit dem Auslassdurchlass ausgebildet ist.

7. Energieerzeugungssystem nach Anspruch 1, wobei der Arbeitsdetektor wenigstens eines von einem Temperaturdetektor, einem Druckdetektor, einem Gaskonzentrationsdetektor und einem Geräuschdetektor ist.

8. Verfahren zum Betreiben eines Energieerzeugungssystems,
wobei das Energieerzeugungssystem umfasst:
ein Brennstoffzellensystem, das beinhaltet: eine Brennstoffzelle (11), die dafür ausgelegt ist, elektrische Energie unter Verwendung eines Brennstoffgases und eines Oxidationsgases zu erzeugen, ein Gehäuse (12), das dafür ausgelegt ist, die Brennstoffzelle (11) einzuhausen, einen Reformer (14a), der dafür ausgelegt ist, das Brennstoffgas aus einem Rohmaterial und Dampf zu erzeugen, und einen Verbrenner (14b), der dafür ausgelegt ist, den Reformer (14a) zu erwärmen; eine Oxidationsgaszuleiteinheit, die dafür ausgelegt ist, das Oxidationsgas der Brennstoffzelle (11) zuzuleiten;
einen Ventilator;
eine Verbrennungsvorrichtung (103); und
einen Abgabedurchlass (70), der dafür ausgebildet ist zu veranlassen, dass das Gehäuse (12) und ein Auslassanschluss (103A) der Verbrennungsvorrichtung (103) miteinander kommunizieren, und dafür ausgelegt ist, ein Auslassgas aus dem Brennstoffzellensystem und ein Auslassgas aus der Verbrennungsvorrichtung (103) an eine Atmosphäre durch eine Öffnung des Abgabedurchlasses (70) abzugeben, wobei die Öffnung zur Atmosphäre offen ist, und
einen Arbeitsdetektor, der dafür ausgelegt ist zu erfassen, dass die Verbrennungsvorrichtung (103) gearbeitet hat,
wobei der Ventilator dafür ausgelegt ist, ein Gas in dem Gehäuse (12) an den Abgabedurchlass (70) abzugeben, um ein Inneres des Gehäuses (12) zu belüften;
**dadurch gekennzeichnet, dass**
die Verbrennungsvorrichtung (103) arbeitet, wenn der Ventilator in einem Stopp-Zustand ist, und sodann der Ventilator arbeitet, wenn das Brennstoffzellensystem aktiviert ist, und
wobei in einem Fall, in dem der Arbeitsdetektor erfasst, dass die Verbrennungsvorrichtung (103) gearbeitet hat, wenn der Ventilator in einem Stopp-Zustand ist, die Steuerung (102) dafür ausgelegt ist zu veranlassen, dass der Ventilator arbeitet, wenn das Brennstoffzellensystem aktiviert ist.

## Revendications

1. Système de génération d'électricité comprenant :
un système de pile à combustible comprenant une pile à combustible (11) configurée pour générer de l'énergie électrique en utilisant un gaz combustible et un gaz oxydant, un boîtier (12) configuré pour loger la pile à combustible (11), un reformeur (14a) configuré pour générer le gaz combustible à partir d'une matière première et de vapeur, et une chambre de combustion (14b) configurée pour chauffer le reformeur (14a) ;
une unité d'alimentation de gaz oxydant configurée pour alimenter le gaz oxydant à la pile à combustible (11) ;
un ventilateur ;
un contrôleur (102) ;
un dispositif de combustion (103) ;
un passage de décharge (70) conformé pour procurer une communication entre le boîtier (12) et un orifice d'échappement (103A) du dispositif de combustion (103) et configuré pour décharger un gaz d'échappement provenant du système de pile à combustible et un gaz d'échappement provenant du dispositif de combustion (103) vers l'atmosphère via une ouverture du passage de décharge (70), l'ouverture étant ouverte vers l'atmosphère, et
un détecteur de fonctionnement configuré pour détecter que le dispositif de combustion (103) a fonctionné,
dans lequel :
le ventilateur est configuré pour décharger un gaz présent dans le boîtier (12) vers le passage de décharge (70) pour ventiler l'intérieur du boîtier (12) ; et **caractérisé en ce que**
le contrôleur (102) est configuré pour commander au dispositif de combustion (103) de fonctionner quand le ventilateur est dans un état arrêté et commande ensuite au ventilateur de fonctionner quand le système de pile à combustible est activé, et
dans lequel, dans le cas où le détecteur de fonctionnement détecte que le dispositif de combustion (103) a fonctionné quand le ventilateur se trouve dans un état arrêté, le contrôleur (102) est configuré pour commander au ventilateur de fonctionner quand le système de pile à combustible est activé.

2. Système de génération d'électricité selon la revendication 1, dans lequel le contrôleur (102) est configuré pour commander à la chambre de combustion de fonctionner après que le contrôleur (102) a commandé au ventilateur de fonctionner.

3. Système de génération d'électricité selon la revendication 1, dans lequel le contrôleur (102) est configuré pour commander au ventilateur de décharger un gaz ayant un volume supérieur ou égal au volume du boîtier vers le passage de décharge (70) quand le système de pile à combustible est activé.

4. Système de génération d'électricité selon l'une quelconque des revendications 1 à 3, dans lequel
le contrôleur (102) est configuré pour commander à l'unité d'alimentation de gaz oxydant d'alimenter le gaz oxydant à la pile à combustible après que le contrôleur (102) commande au ventilateur de fonctionner.

5. Système de génération d'électricité selon la revendication 1, dans lequel :
le dispositif de combustion (103) comprend une unité d'alimentation d'air de combustion configurée pour alimenter de l'air de combustion ; et
quand le dispositif de combustion (103) est en fonctionnement, le contrôleur (102) est configuré pour contrôler le ventilateur de telle sorte qu'un débit d'air du ventilateur devient supérieur ou égal à un premier débit d'air prédéterminé.

6. Système de génération d'électricité selon l'une quelconque des revendications 1 à 5, comprenant en outre
un passage d'admission d'air (78) conformé pour procurer une communication entre le boîtier (12) et le dispositif de combustion (103) et configuré pour alimenter de l'air au système de pile à combustible et au dispositif de combustion (103) via une ouverture du passage d'admission d'air (78), l'ouverture étant ouverte vers l'atmosphère, dans lequel
le passage d'admission d'air (78) est conformé de manière à permettre un échange de chaleur avec le passage d'échappement.

7. Système de génération d'électricité selon la revendication 1, dans lequel le détecteur de fonctionnement est au moins un détecteur parmi un détecteur de température, un détecteur de pression, un détecteur de concentration de gaz et un détecteur de son.

8. Procédé de fonctionnement d'un système de génération d'électricité,
le système de génération d'électricité comprenant :
un système de pile à combustible comprenant une pile à combustible (11) configurée pour générer de l'énergie électrique en utilisant un gaz combustible et un gaz oxydant, un boîtier (12) configuré pour loger la pile à combustible (11), un reformeur (14a) configuré pour générer le gaz combustible à partir d'une matière première et de vapeur, et une chambre de combustion (14b) configurée pour chauffer le reformeur (14a) ;
une unité d'alimentation de gaz oxydant configurée pour alimenter le gaz oxydant à la pile à combustible (11) ;
un ventilateur ;
un dispositif de combustion (103) ; et
un passage de décharge (70) conformé pour procurer une communication entre le boîtier (12) et un orifice d'échappement (103A) du dispositif de combustion (103) et configuré pour décharger un gaz d'échappement depuis le système de pile à combustible et un gaz d'échappement provenant du dispositif de combustion (103) vers l'atmosphère via une ouverture du passage de décharge (70), l'ouverture étant ouverte à l'atmosphère, et
un détecteur de fonctionnement configuré pour détecter que le dispositif de combustion (103) a fonctionné,
dans lequel :
le ventilateur est configuré pour décharger un gaz présent dans le boîtier (12) vers le passage de décharge (70) pour ventiler l'intérieur du boîtier (12) ; et **caractérisé en ce que**
le dispositif de combustion (103) fonctionne quand le ventilateur se trouve dans un état arrêté, et le ventilateur fonctionne ensuite quand le système de pile à combustible est activé, et
dans lequel, dans le cas où le détecteur de fonctionnement détecte que le dispositif de combustion (103) a fonctionné quand le ventilateur se trouve dans un état arrêté, le contrôleur (102) est configuré pour commander au ventilateur de fonctionner quand le système de pile à combustible est activé.
